# EUROPEAN PATENT APPLICATION

(11) **EP 1 143 655 A1**
(43) Date of publication of application: **10.10.2001**
(21) Application number: 00969864.8
(22) Date of filing: 18.10.2000
(51) Int. Cl.: H04L 9/08, G06F 12/14, G11B 20/10

(54) **INFORMATION PROCESSOR AND INFORMATION PROCESSING METHOD, AND RECORDED MEDIUM**

(30) Priority: 18.10.1999 JP 29492699
(71) Applicant: Sony Corporation, Tokyo 141-0001 (JP)
(72) Inventor: OSAWA, Yoshitomo Sony Corporation, Shinagawa-ku, Tokyo 141-0001 (JP); ASANO, Tomoyuki Sony Corporation, Shinagawa-ku, Tokyo 141-0001 (JP)
(74) Representative: Pratt, Richard Wilson
(86) International application number: JP0007243
(87) International publication number: WO0130019

(57) **Abstract**

An encrypt/decrypt LSI contains LSI keys common with other apparatuses, and a ROM stores device keys specific for the apparatus. The encrypt/decrypt LSI reads device keys stored in the ROM and creates data keys specific for the apparatus from the device keys and the LSI keys contained therein. And the encrypt/decrypt LSI uses the data keys to encrypt/decrypt data. These steps enable to prevent illegal copies of data while avoiding to the maximum extent possible any increases in the cost of the information processing apparatus.

## Description

### Technical Field

The present invention relates to an information processing apparatus, an information processing method and a recording medium, particularly, an information processing apparatus, an information processing method and a recording medium enabling to prevent illegal copies of data while avoiding by all means any cost increases.

### Background Art

As digital signal processing technology advances and develops, recording apparatuses and recording media for digitally recording information are gaining ground lately.

With these recording apparatuses and recording media, pictures and sounds can be recorded repeatedly without deterioration, in other words, they can be copied repeatedly with their quality maintained, the distribution of any recording media on which such illegal copies have been made on the market would impair the interest of copyright owners of movies and other intellectual properties. Therefore, recording apparatuses and recording media are provided with a system that prevents any illegal copies.

In other words, for example, MD (a trade mark) (Mini Disk) apparatuses are provided with SCMS (Serial Copy Management System) as a method of preventing illegal copies. SCMS prevents illegal copies by outputting SCMS signals along with audio data from a digital interface (DIF) on the reproduction side and by controlling the recording of audio data supplied from the reproduction side based on the SCMS signals equally supplied by the reproduction side on the recording side.

In other words, SCMS signals are signals which indicate whether the audio data are Copy free, copy once allowed or copy prohibited, and the recording side, on receiving audio data coming from the DIF, detects the SCMS signals transferred together with the audio data. And when the SCMS signal indicates that the audio data are Copy free, the audio data are recorded together with the SCMS signal on a Mini Disk. When the SCMS signal shows "copy once allowed," the SCMS signal is changed into a "copy prohibited" signal and is recorded together with the audio data on a Mini Disk. When the SCMS signal shows "copy prohibited," the audio data are not recorded.

As described above, Mini Disk apparatuses use the SCMS to prevent illegal copies of copy righted audio data.

However, it is difficult for the SCMS to address to the problem of illegal copies when a Mini Disk apparatus in which the recording of audio data supplied from the reproduction side is not controlled based on the SCMS signals is manufactured.

Accordingly, DVD players adopted for example a contents scramble system to prevent illegal copies of copy righted data.

In this contents scramble system, DVD-ROM (Read Only Memory) stores encrypted video data or audio data, and a key to decrypt the encrypted video data or audio data is given to each licensed DVD player. The license is granted on the condition that the DVD player would be designed to ensure that it observes the prescribed operating requirements regulating , for example, making illegal copies. Therefore, licensed DVD players can use the key given to decrypt the encrypted data and to reproduce pictures and voices recorded on a DVD-ROM. Unlicensed DVD players which have no keys to decrypt encrypted data, on the other hand, cannot decrypt such data. This prevents making illicit copies by reproducing DVD-ROMs on a DVD player not satisfying the conditions prescribed at the time of licensing.

The contents scramble system used by such a DVD-ROM as described above is designed for recording media on which users cannot write data (hereinafter referred to as "ROM media" for the sake of convenience), and its application to recording media on which users can write data (hereinafter referred to as RAM media) is not considered.

In other words, even if data recorded on a ROM medium is encrypted, copying the entire encrypted data onto RAM media results in the production of a so-called pirate version which can be reproduced on licensed legitimate apparatuses.

Therefore, the applicant of the present application proposed in Japanese Patent Application Laid Open 1999-224461 (Japanese Patent Application 1998-25310) a method in which information for identifying individual recording media (hereinafter referred to as "media identification information") is recorded on the recording medium together with other data, and only apparatuses licensed to such media identification information can access the media identification information of that recording medium. In this method, data on the recording medium are encrypted with a media identification information and a secret key (master key) obtained by obtaining a license , and even if an unlicensed apparatus may be able to read this encrypted data, no meaningful data can be obtained. Meanwhile, the operation of apparatuses is regulated when it is licensed so that no illegitimate copies may be made.

Unlicensed apparatuses cannot access any media identification information, and in addition media identification information is separate for each recording medium. Therefore, even if an unlicensed apparatus copies the whole encrypted data recorded on a recording medium, data recorded on a recording medium made in this way cannot be properly decrypted not only by an unlicensed apparatus but also by a licensed apparatus preventing effectively unlawful copies.

Incidentally, methods of recording media identification information on a recording medium include one by which the manufacturer of the recording medium records the information during the manufacture of the recording medium by the manufacturer, and another by which a licensed apparatus record the same together with the relevant data at the time of recording of the data on the recording medium.

However, if the manufacturers of recording media are required to record media identification information, the burden of such manufacturers increases. And if the licensed apparatuses are required to record media identification information, all the licensed apparatuses will be provided with software and hardware for recording media identification information, and therefore the recording method of media identification information risks to be disclosed by reverse engineering and other methods.

A method to prevent more strongly illegal copies without burdening the manufacturers of recording media is to use exclusively the apparatus that recorded the data to reproduce the data.

This can be realized by, for example, giving a specific key to the licensed apparatus and using the specific key to encrypt data and recording the encrypted data on the recording medium. In this case, even if the data recorded on the recording medium may be copied illegally, the data cannot be correctly decrypted by other apparatuses not possessing the key used for recording, thus preventing effectively illegal copies like in the case of said media identification information.

However, the provision of a specific key to each licensed apparatus and the use of such specific key to encrypt data involve the following problem.

As it is necessary to ensure that no keys are disclosed to the outside to the maximum extent possible, when the key is used within an IC (Integrated Circuit) to encrypt or decrypt data, the storage of the specific key within the IC is desirable from the viewpoint of security.

In case where a specific key is stored within an IC, it is necessary to create an nonvolatile memory area in the IC, which leads to an increased cost.

Equally, if a specific key is stored in a device outside an IC, for example a ROM, and if an arrangement is made to have the CPU (Central Processing Unit) read the key from the ROM as required to give the same to the IC, there is a risk of leakage of the key to the outside by someone monitoring a bus or elsewhere when the CPU reads the key from the ROM.

### Disclosure of the Invention

It is therefore an object of the present invention to provide an information processing apparatus, an information processing apparatus and a recording medium enabling to prevent illegal copies of data while avoiding any cost increase to the maximum extent possible.

The information processing apparatus according to the present invention for encrypting information and decrypting encrypted information comprising: a first key creating means containing built-in key information for creating the first encryption key information, a supplying means for supplying external key information related with the information processing apparatus from outside the key creating means to the first key creating means, and a first processing means for encrypting or decrypting by using the first encryption key information. The first key creating means comprising: a storing means for storing built-in key information and an encrypt key creating means for creating the first encryption key information by using the built-in key information stored in the storing means stored in the first key creating means and external key information provided by the providing means.

The key creating means according to the present invention for creating encryption key information for encrypting information or decrypting encrypted information comprising: a storing means for storing built-in key information, and an encryption key creating means for creating encryption key information by using the built-in key information stored in a storing means housed in the key creating apparatus and the external key information related with the information processing apparatus to which the key creating apparatus is connected supplied from outside of the key creating apparatus.

The information processing method according to the present invention for encrypting information or decrypting encrypted information by means of an information processing apparatus provided with a key creating device comprising: a supplying step for supplying the key creating device storing built-in key information with external key information related with the information processing apparatus from outside of the key creating device, a first key creating step for creating the first encryption key information by using the built-in key information stored in the key creating device and the external key information provided from outside of the key creating device, and a first processing step for encrypting or decrypting by means of the first encryption information.

The recording medium according to the present invention contains a program that makes the information processing apparatus provided with a key creating device to execute the step of encrypting information or decrypting encrypted information. The program includes the step of supplying a key creating device containing built-in key information with external key information related with the information processing device from outside of the key creating device, the step of making the key creating device create encryption key information by using the built-in key information stored in the key creating device and the external key information provided from outside of the key creating device and the step of encrypting information by using the encryption key information created.

The recording medium according to the present invention comprising: a program that makes the information processing apparatus to execute the step of encrypting information or decrypting encrypted information. The program comprising:
the step of inputting external key information related with the information processing apparatus, from outside of the program, the step of creating encryption key information by using the built-in key information contained in the program and external key information inputted from outside of the program and the step of executing an encrypting or decrypting step by using the encryption key information.

### Brief Description of Drawings

Fig. 1 is a block diagram showing the specific configuration of a recording and reproducing apparatus made by applying the present invention.
Figs. 2A and 2B are flowcharts showing the recording process carried out by the recording and reproducing apparatus.
Figs. 3A and 3B are flowcharts showing the reproducing process carried out by the recording and reproducing apparatus.
Fig. 4 is a block diagram showing specific configuration of an encrypt/decrypt LSI5.
Fig. 5 is a block diagram showing the structural configuration of a key creating section 12.
Fig. 6 is a block diagram showing the structural configuration of the encrypt/decrypt LSI 5.
Fig. 7A and 7B are flowcharts showing a recording process consisting of recording and simultaneously controlling copies.
Fig. 8A and 8B are flowcharts showing a reproducing process consisting of reproducing and simultaneously controlling copies.
Fig. 9 is a block diagram showing the specific configuration of another recording and reproducing apparatus according to the present invention.
Fig. 10 is a block diagram showing the specific configuration of a computer according to the present invention.

### Best mode for Carrying out the Invention

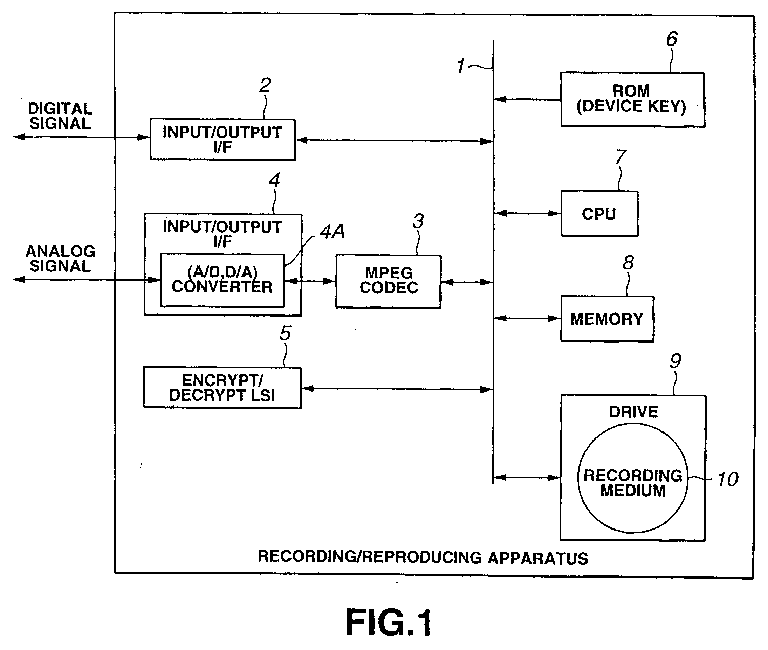

The information processing apparatus, information processing method and recording medium according to the present invention is described with reference to the drawings. Fig. 1 is a block diagram showing the specific configuration of a recording and reproducing apparatus made by applying the present invention.

The bus 1 connects mutually an input-output I/F (Interface) 2, a MPEG (Moving Picture Experts Group) codec 3, an encrypt/decrypt LSI (Encrypt/Decrypt Large Scale Integrated Circuit) 5, a CPU (Central Processing Unit) 7, a memory 8 and a drive 9.

The input-output I/F 2 receives digital signals carrying contents supplied from the outside, outputs them on the bus 1, receives digital signals on the bus 1 and outputs them outside. The MPEG codec 3 MPEG-decodes MPEG-codified data supplied through the bus 1, outputs them outside, and MPEG-encodes digital signals supplied from the input-output I/F 4 to output the same on the bus 1.

The input-output I/F4 contains a converter 4A. And the input-output I/F 4 receives analog signals as contents supplied from outside, converts them A/D (from analog to digital) by means of the converter 4A to output the same to the MPEG codec 3 as digital signals, and converts D/A (from digital to analog) the digital signals supplied from the MPEG codec 3 by means of the converter 4A to output the same outside.

The encrypt/decrypt LSI 5 is composed of for example a single tip LSI, encrypts or decrypts digital signals supplied as contents through the bus 1 and output the same on the bus 1.

The ROM 6 stores specific device keys, for example, for each recording/ reproducing apparatus or for each group of recording/reproducing apparatuses.

The CPU 7 controls the MPEG codec 3 or the encrypt/decrypt LSI 5 by executing programs stored in the memory 8. The memory 8 is composed of, for example, a nonvolatile memory and stores programs executed by the CPU 7 and data necessary for the operation of the CPU 7. The drive 9 drives a recording medium 10, reads (reproduces) digital data from the recording medium 10 and outputs on the bus 1, and also supplies digital data supplied through the bus 1 to the recording medium 10 and records the same thereon.

The recording medium 10 consists of, for example, an optical disk, magnetooptical disk, magnetic disk, magnetic tape, or RAM and other semiconductor memories, and is in this embodiment detachable to the drive 9. Incidentally, it is possible to integrate a recording medium 10 to the recording/reproducing apparatus.

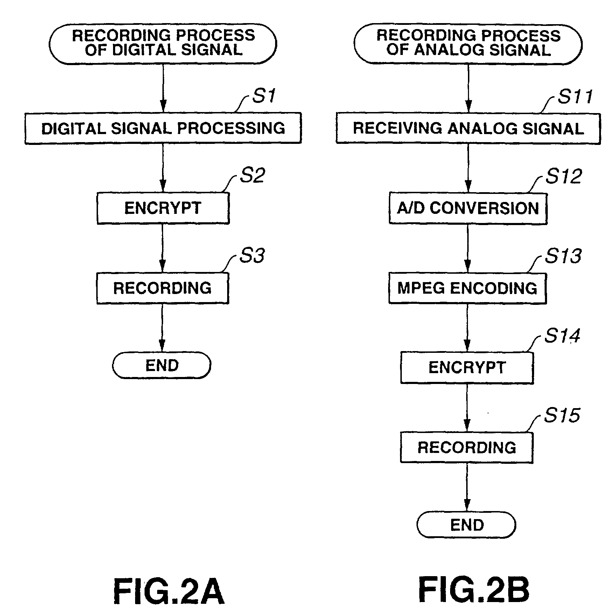

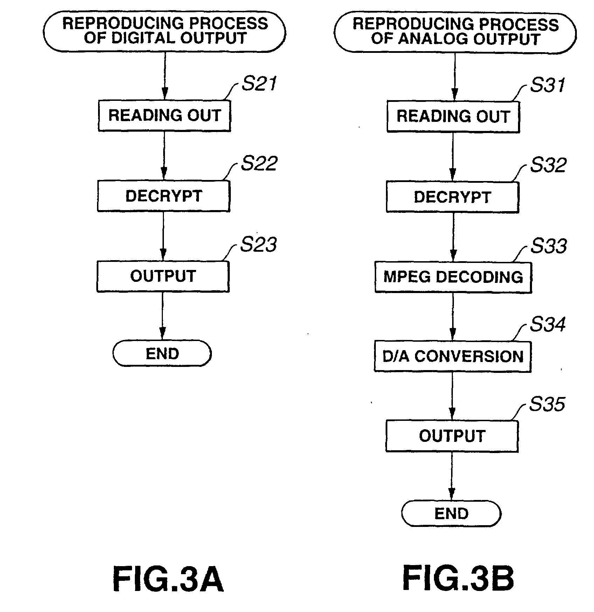

And now, the operation of the recording/reproducing apparatus shown in Fig. 1 will be explained with reference to the Fig. 2 and Fig. 3 flowcharts.

When contents in digital signals supplied from outside are recorded on a recording medium 10, a recording operation according to the flowchart shown in Fig. 2A is carried out.

When digital signal contents (digital contents) are supplied through, for example, an IEEE (Institute of Electrical and Electronics Engineers) 1394 serial bus to the input-output I/F 2, in step S1 the input-output I/F 2 receives the digital contents and supplies the same through the bus 1 to the encrypt/decrypt LSI 5. In step S2 the encrypt/decrypt LSI 5 encrypts the digital contents supplied as described below and outputs the resultant encrypted contents through the bus 1 to the drive 9. The drive 9 stores the encrypted contents on a recording medium 10, and the recording operation ends.

Incidentally, as a standard to protect digital contents when such digital contents are transferred between apparatuses connected through an IEEE 1394 serial bus, five companies including Sony Corp., the applicant of the present invention, established 5CDTCP (Five Company Digital Transmission Content Protection) (hereinafter referred to as "DTCP"). This DTCP provides that, prior to the transmission of not free copy digital contents, the transmitting side and the receiving side authenticate each other whether they can correctly handle copy control information for controlling copies, and then the transmitting side encrypts the digital contents and transmits them, and the receiving side decrypts the encrypted digital contents (encrypted contents).

Upon receiving in step S1 encrypted contents through the IEEE 1394 serial bus, the input-output I/F 2 decrypts the encrypted contents in accordance with the DTCP standard to reform the same into plain text contents, and then supplies the same to the encrypt/decrypt LSI 5.

At this point, digital contents are encrypted according to the DTCP standard by creating a key that changes with the passage of time and by using this key. The encrypted digital contents including the key used for their encryption are transferred onto the IEEE 1394 serial bus, and on the receiving side the encrypted digital contents are decrypted by means of the key contained therein.

According to the DTCP, precisely speaking, the initial value of the key and flags showing the timing of changes in the key used for the encryption of the digital contents are included in the encrypted contents. And on the receiving side, changes made in the initial value of the key contained in the encrypted contents at a timing indicated by the flags equally contained in the encrypted contents lead to the creation of the key used for encryption and the decryption of the encrypted contents. Here, it is possible to consider that the whole system is equivalent to the encrypted contents containing a key for their decryption, and hereinafter we shall consider so.

Detailed particulars of the DTCP are described in "Digital Transmission Content Protection Specification Volume 1 (Informational Version)" available freely from DTLA (Digital Transmission Licensing Administrator).

When analog signal contents supplied from outside are recorded on a recording medium 10, the recording operation as shown in the flowchart of Fig. 2B is performed.

When analog signal contents (analog contents) are supplied to the input-output I/F 4, in step S11 the input-output I/F 4 receives the analog contents, passes to step S12 where the analog contents are converted A/D by means of a built-in converter 4A to transform them into digital signal contents (digital contents). These digital contents are supplied to the MPEG codec 3, and in step S13 are MPEG encoded to be supplied to the encrypt/decrypt LSI 5 through the bus 1.

In the succeeding steps S14 or S15, similar processing as those mentioned in steps 2 or 3 of Fig. 2A are performed and the recording operation ends then.

When the contents recorded on a recording medium 10 are reproduced to be outputted outside as digital contents, on the other hand, a reproduction operation according to the flowchart shown in Fig. 3A will be performed.

At first in step S21, the drive 9 reads out encrypted contents recorded on the recording medium 10, which are then supplied to the encrypt/decrypt LSI 5 through the bus 1. In step S22, the encrypt/decrypt LSI 5 decrypts the encrypted contents supplied from the drive 9 into plain text digital contents as described below, and are supplied to the input-output I/F 2 through the bus 1. The input-output I/F 2 outputs outside the digital contents supplied from the encrypt/decrypt LSI 5 to end the reproduction operation.

Meanwhile, in step S23 in outputting digital contents through the IEEE 1394 serial bus, the input-output I/F 2 authenticates each other with the other apparatus in accordance with the DTCP standard as described above, and then encrypts digital contents and transfers the same.

Then, when the contents recorded on a recording medium 10 are reproduced and outputted outside as analog contents, a reproduction operation according to the flowchart shown in Fig. 3B is performed.

In steps S31 or S32, similar processing as those shown in steps S21 or S22 of Fig. 3B are performed, and the resultant plain text digital contents obtained from the encrypt/ decrypt LSI 5 are supplied to the MPEG codec 3 through the bus 1. In step S33, the MPEG codec 3 MPEG decodes digital contents and supplies the result to the input-output I/F 4. In step S34, the input-output I/F 4 converts D/A by means of a built-in converter 4A the digital contents MPEG decoded digital contents to transform them into analog contents. And the process advances to step S35 where the input/ output I/F 4 outputs the analog contents outside to end the reproduction operation.

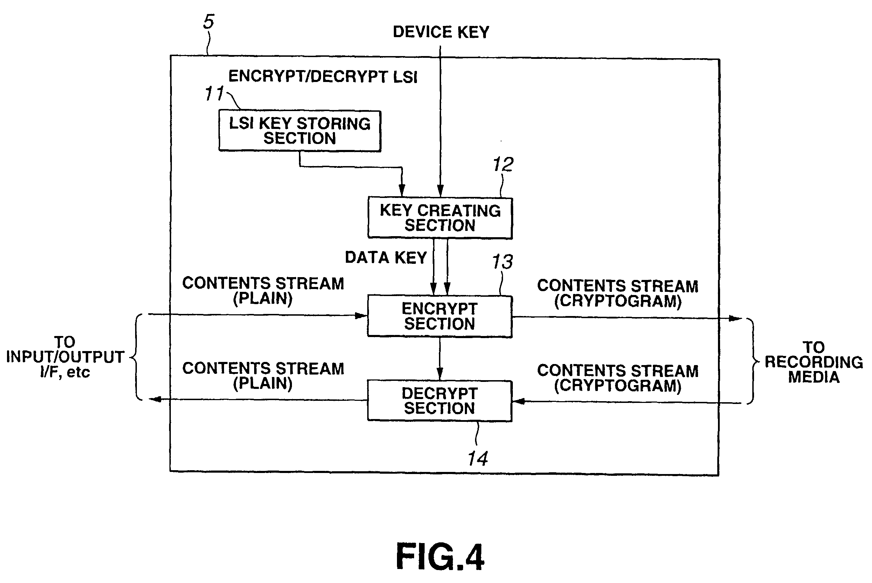

The following Fig. 4 is a block diagram showing the specific configuration of the encrypt/decrypt LSI 5 shown in Fig. 1.

The LSI key storing section 11 stores common LSI keys to a plurality of encrypt/decrypt LSIs (therefore common to a plurality of recording/reproducing apparatuses). The LSI key storage section 11 essentially stores common LSI keys to all the encrypt/decrypt LSIs. However, it is possible to make a setup in which a common LSI key is stored for some encrypt/decrypt LSI groups (for example by the production lot). The question of how many encrypt/decrypt LSIs should be covered by a single common LSI key can be determined, for example, by taking into account the production cost of an encrypt/decrypt LSI.

The key creating section 12 reads out the LSI key stored in the LSI key storing section 11 and obtains device key stored in a ROM 6 outside of the encrypt/decrypt LSI 5 by reading the same through the bus 1, and applies a coefficient for the creation of keys (key creating coefficient) to these LSI key and device key to create a data key used to encrypt/decrypt contents.

In the meanwhile, for this key creating coefficient, it is possible to use a one-way coefficient that facilitates the calculation of a data key from a LSI key and a device key but which does not allow on the contrary to calculate the LSI key and the device key from the data key.

The key creating section 12 gives the combination of a LSI key and a device key as the SHA-1 hash coefficient mentioned in 180-1 of FIPS (Federal Information Processing Standards) established by the NITS (National Institute of Standards and Technology) of the U.S. and other one-way coefficients for input, and calculates the hash coefficient to obtain a data key. Or alternatively the key creating section 12 uses encryption coefficients such as, for example, FIPS 46-2, FIPS 46-3 DES, Triple-DES, etc. to encrypt the device key with the LSI key to obtain a data key.

In case where a media key is allocated to the recording medium 10 as a specific value (key) or a drive key is allocated to the drive 9 as a specific value (key), it is possible to use conjointly the media key or the drive key to create a data key.

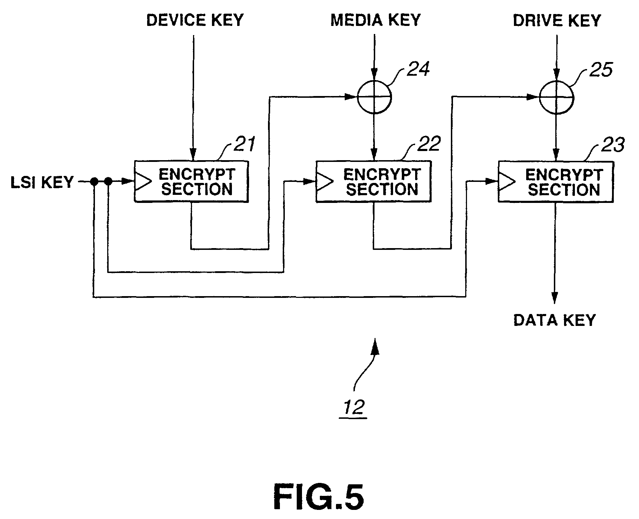

When a data key is created by using the media key and the drive key in addition to the LSI key and the device key, the key creating section 12 can be configured for example as shown in Fig. 5.

Fig. 5 is a block diagram showing the specific configuration of a key creating section 12 for creating data keys according to the Data Integrity Mechanism (DIM) stipulated by the ISO/IEC9797.

An encrypting section 21 uses the LSI key as a key to encrypt the device key and outputs the result to an arithmetic unit 24. The arithmetic unit 24 carries out specified arithmetic operations (for example exclusive "OR" operations) on the outputs of the encrypting section 21 and the media keys read out by the drive 9 from the recording medium 10 and obtained through the bus 1, and supplies the result to the encrypting section 22. The encrypting section 22 uses the LSI key as a key to encrypt the output of the arithmetic unit 24 and outputs the result to the arithmetic unit 25. The arithmetic unit 25 performs a specified arithmetic operation (for example an exclusive "OR" operation) on the output of the encrypting section 22 and the drive key read out from the drive 9 through the bus 1, and outputs the result to the encrypting section 23. The encryption section 23 uses the LSI key as a key to encrypt the output of the arithmetic unit 25, and outputs the encryption result as a data key.

Returning to Fig 4, the data key obtained in the key creating section 12 is supplied to the encrypting section 13 and the decrypting section 14.

When contents are to be encrypted, the contents to be encrypted are supplied to the encrypting section 13. The encrypting section 13 encrypts the contents with the data key and outputs the result as encrypted contents on the bus 1.

When the encrypted contents read out from the recording medium 10 are to be decrypted, the encrypted contents are supplied to the decrypting section 14. And the decrypting section 14 decrypts the encrypted contents with the data key, and outputs the results as plain text contents on the bus 1.

In the meanwhile, as the encryption method used in the encryption section 13 and the decryption method used in the decryption section 14, it is possible to use for example the Data Encryption Standard mentioned in FIPS 46-2 and other methods.

Since a common LSI key is built in the encrypt/decrypt LSI 5 as described above and the LSI key and the specific device key stored in an external ROM 6 are used to create a data key, the data key becomes specific to the recording/reproducing apparatus. As a result, the contents encrypted with the data key and recorded on the recording medium 10 can only be decrypted by the recording/reproducing apparatus used for their recording. Thus, it becomes possible to prevent more strongly illegal copies without creating any burden on the manufacturers of recording media.

In addition, since the LSI key built in the encrypt/decrypt LSI 5 is common, there is no need to secure a nonvolatile memory area therein, which does not increase costs.

Furthermore, since a LSI key is contained in the encrypt/decrypt LSI 5, even if a device key stored in the outside ROM 6 has leaked, the encrypted contents recorded in the recording medium 10 cannot be immediately decoded (decrypted).

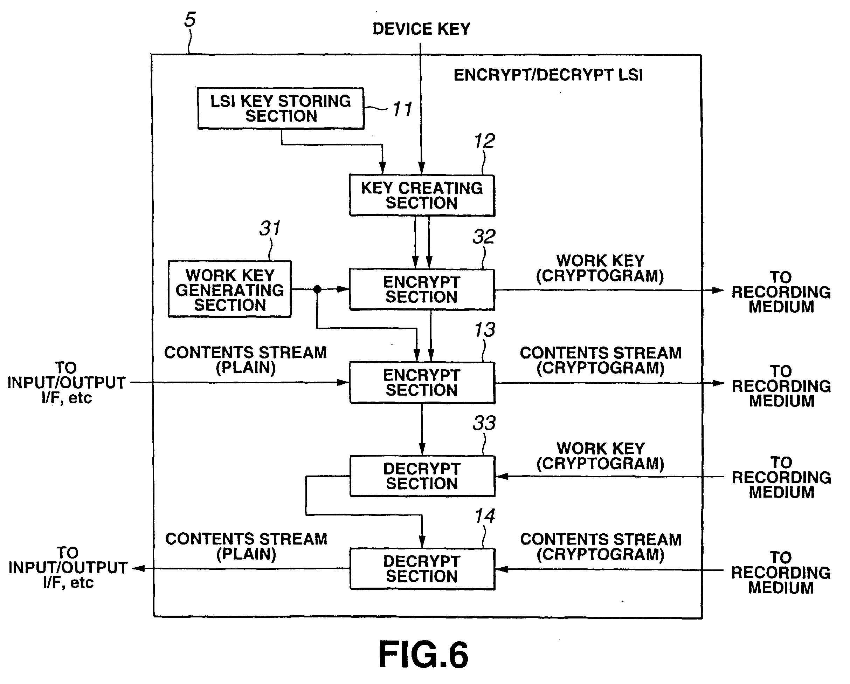

And now, Fig. 6 is a block diagram showing the specific configuration of the encrypt/decrypt LSI 5 shown in Fig. 1 and other devices. With regards to sections of the figure corresponding to those shown in Fig. 4, identical codes are marked, and hereafter their explanations will be omitted. Specifically speaking, the encrypt/decrypt LSI 5 shown in Fig. 6 is essentially configured in the same way as shown in Fig. 4 except that a work key creating section 31, an encrypting section 32 and a decrypting section 33 are created anew.

In the embodiment shown in Fig. 6, data keys are created in the same way as shown in Fig. 4 and are supplied to the encrypting section 32.

And when contents are to be encrypted, the work key generating section 31 generates pseudo-random numbers based on for example the current time, data volume of contents to be encrypted, etc. and the pseudo-random numbers are outputted to the encrypting sections 13 and 32 as work keys.

The encrypting section 32 encrypts the work keys supplied from the work key generating section 31 with the work keys supplied from the key creating section 12 and outputs the resultant encrypted work keys on the bus 1.

The encrypting section 13, on the other hand, encrypts the contents to be encrypted supplied with work keys, and outputs the same as encrypted contents on the bus 1.

The encrypted contents outputted on the bus 1 as described above are matched with the encrypted work keys outputted on the bus 1 and are recorded on a recording medium 10 by the drive 9.

When the contents recorded on a recording medium 10 as described above are to be reproduced, the encrypted contents and the matching encrypted work key are read by the drive 9 from the recording medium 10, and are supplied to the encrypt/decrypt LSI 5 through the bus 1.

In the key creating section 12 of the encrypt/decrypt LSI 5, data keys are created in the same manner as described above and are supplied to the decrypting section 33.

The decrypting section 33 decrypts the encrypted work keys read out from the recording medium 10 with data keys supplied from the key creating section 12, and outputs the resulting work keys to the decrypting section 14.

The decrypting section 14 decrypts encrypted contents with work keys supplied from the decrypting section 33 and supplies them as plain text contents on the bus 1.

Since in the embodiment of Fig. 4 contents are always encrypted with a fixed data key, when for example the combination of certain plain text contents and encrypted text contents encrypted with a data key fell into the hands of a person trying to make an illegal copy, a data key is decoded by using a cryptography attacking method such as the so-called "linear attack" or "differential attack," leading to the decryption of the whole encrypted contents encrypted by the data key and creating a risk of illegal copies thereof.

In the embodiment of Fig. 6, on the other hand, contents are encrypted with work keys varying on the basis of the data volume of contents subject to be encrypted. Thus, even if a work key used for the encryption of a particular content should leak, the protection of other contents are not affected.

Since the work keys used for the encryption of contents in the embodiment of Fig. 6 are encrypted with the data key specific for each apparatus, the encrypted work key cannot be correctly decrypted on other apparatuses. Therefore, in this case also the contents recorded on the recording medium 10 can only be decrypted correctly on the apparatus on which the reading was made.

Furthermore, in order to protect the interests of copyright holders of contents, it is necessary to control the copy of contents on the licensed apparatus. In other words, when contents are to be recorded on a recording medium 10, it is necessary to investigate whether the contents can be copied (Copy free), and to record only the contents allowed to be copied. And in addition, when the contents recorded on a recording medium 10 are reproduced and outputted, it is necessary to ensure that the contents outputted would not be illegally copied later on.

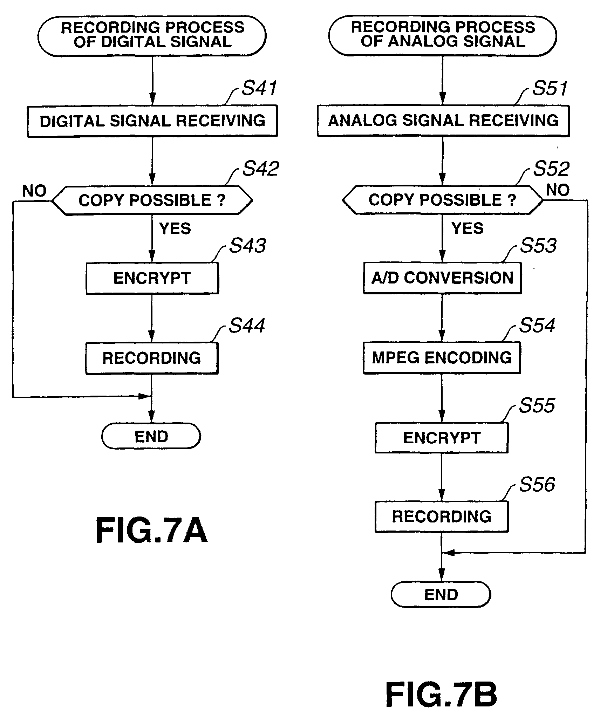

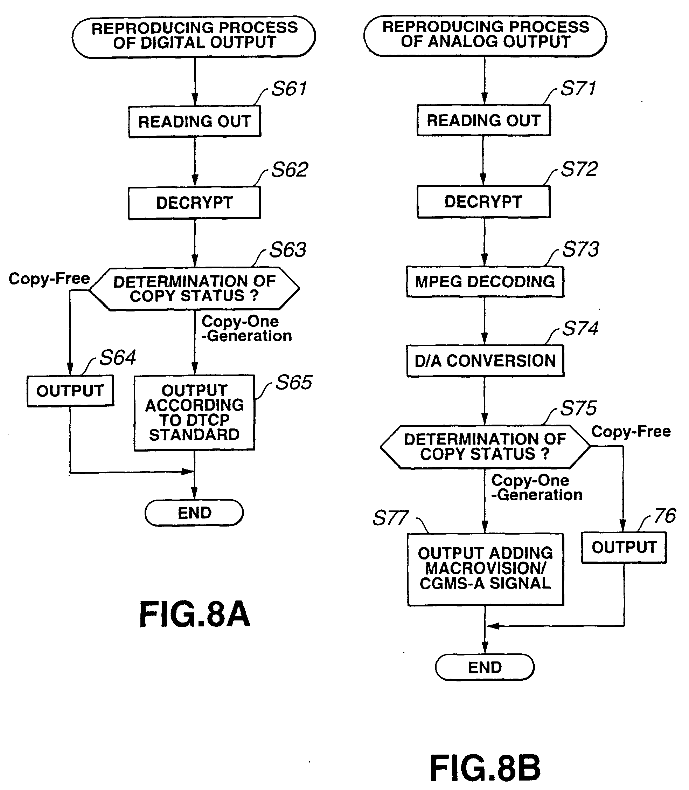

Therefore, the operation of the recording/reproducing apparatus shown in Fig. 1 in case where contents are recorded and/or reproduced while controlling such copy of contents will be explained by reference to the flowcharts shown in Figs. 7 and 8.

To begin with, in case where external digital signal contents are recorded on a recording medium 10, a recording operation according to the flowchart shown in Fig. 7A will be performed.

When digital signal contents (digital contents) are supplied to the input-output I/F 2 through for example an IEEE 1394 serial bus, in step S41 the input-output I/F 2 receives the digital contents and passes to step S42.

In step S42, the input-output I/F 2 determines whether the digital contents that has been received are copy allowed or not.

In other words, if for example the contents received by the input-output I/F 2 are not encrypted (for example plain text contents are supplied to the input-output I/F 2 without using the above DTCP), the contents are determined copy allowed.

Or, supposing for example that the recording/reproducing apparatus conforms to the DTCP, the DTCP prescribes 2-bit EMI (Encryption Mode Indicator) as copy control information to control copies. If the EMI is 00B (B indicates that the preceding value is a binary), it shows that the contents are Copy free, and in case the EMI is 01B, it shows that the contents cannot be copied any further (Copy prohibited). And if the EMI is 10B, it shows that the contents can be copied only once (Copy once allowed), and if the EMI is 11B, it shows that the contents are prohibited to copy (Never-copy).

Therefore, when the signals supplied to the input-output I/F 2 include an EMI and that the EMI is either "Copy free" or "Copy once allowed," the contents are determined to be allowed to be copied. And when the EMI is either "No-more-copy" or "Copy never," the contents are determined to be prohibited to copy.

If in step S42 the contents are determined to be prohibited to copy, steps S43 and S44 are skipped, and the recording process ends. Therefore, in this case nothing will be recorded on the recording medium 10.

And if in step S42 it is determined that the contents are allowed to be copied, the process passes to step S43, and thereafter in steps S43 and S44 operations similar to those in steps S2 or S3 of Fig. 2A are performed, and accordingly the contents are recorded on the recording medium 10, to end the recording process.

A point that should be noted in this connection is that, while the EMI is included in digital signal contents supplied to the input-output I/F 2, when the digital contents are recorded, the EMI or information that shows the copy control status in the same way as the EMI (for example embedded CCI in the DTCP) are recorded along with the digital contents.

When analog signal contents supplied from the outside are to be recorded on a recording medium 10, recording operations according to the flowchart shown in Fig. 7B will be performed.

Specifically speaking, when analog signal contents (analog contents) are supplied to the input-output I/F 4, in step S51 the input-output I/F 4 receives the analog contents, passes to step S52 and determines whether the analog contents received are allowed to be copied.

Here, the determining operation in step S52 will be carried out based on whether for example the signals received by the input-output I/F 4 include Macrovision signals or CGMS-A (Copy Generation Management System - Analog) signals or not.

In other words, the Macrovision signals are signals that turn into noises when they are recorded in a VHS system video cassette tape, and when these signals are included in the signals received by the input-output I/F 4, it will be determined that the analog contents are not allowed to be copied.

And for example, the CGMS-A signals are signals to which CGMS-A signals used for the control of copies of digital signals are applied for the control of copies of analog signals, and shows that the contents are either Copy free, Copy once allowed or Copy prohibited. Therefore, if the CGMS-A signals are included in the signals received by the input-output I/F 4 and that the CGMS-A signals shows "Copy free" or "Copy- one-generation," it is determined that the analog contents are allowed to be copied. And if the CGMS-A signals shows "Copy prohibited," it is determined that the analog contents are not allowed to be copied.

And if for example neither Macrovision signals nor CGMS-A signals are included in the signals received by the input-output I/F 4, it is determined that the analog contents are allowed to be copied.

If in step S52 it is determined that the analog contents are not allowed to be copied, steps S53 to S56 are skipped to end the recording process. Therefore, in this case no contents are recorded on the recording medium 10.

And if in step S52 it is determined that the analog contents are allowed to be copied, the process advances to step S53, and thereafter in steps S53 to S56 operations similar to those described in steps S12 to S15 of Fig. 2B are carried out and contents are recorded on the recording medium 10 to end the recording process.

And if the analog signals received by the input-output I/F 4 include CGMS-A signals, when the analog contents are recorded on the recording medium 10, the CGMS-A signals also are recorded on the recording medium 10.

Then, when contents recorded on a recording medium 10 are reproduced and are outputted outside as digital contents, reproducing operations according to the flowchart shown in Fig. 8A will be carried out.

To begin with, in step S61 or S62 operations similar to those described in step S21 or S22 of Fig. 3B are carried out. The digital contents read out from the recording medium 10 in this step and decrypted by the encrypt/decrypt LSI 5 changing into plain text digital contents are supplied through the bus 1 to the input-output I/F 2.

In step S63 the input-output I/F 2 determines whether the digital contents supplied are allowed to be copied thereafter.

Specifically, if for example the digital contents supplied to the input-output I/F 2 do not include any EMI or other information indicating the copy control status in the same way as the EMI, the digital contents are determined to be allowed to be copied later on.

And if for example the digital contents supplied to the input-output I/F 2 include an EMI, and therefore at the time of recording of the contents the EMI is recorded in accordance with the DTCP standard, if the EMI (Recorded EMI) is "Copy free," the digital contents are determined to be allowed to be copied. And if the EMI is "Copy once allowed," the digital contents will be determined not allowed to be copied later on.

It should be noted in this connection that no recorded EMI is "Copy prohibited," because in this case the digital contents will not be recorded on the recording medium 10 as mentioned above.

If in step S63 digital contents are determined to be allowed to be copied later on, the process advances to step S64 where the input-output I/F 2 outputs the digital contents outside as they are to end the reproducing process.

And if in step S63 digital contents are determined to be not allowed to be copied later on, the process advances to step S65, where the input-output I/F 2 outputs outside the digital contents in accordance with for example the DTCP standard in a form that cannot be copied later on, and thus the reproducing process comes to an end.

Specifically, if for example the recorded EMI is "Copy once allowed," the digital contents are already recorded on the recording medium 10 and are once copied. Therefore, no more copy is allowed. Thus, the input-output I/F 2 changes the EMI from "Copy once allowed" to "Copy prohibited" and outputs the same outside. And the input-output I/F2 authenticates mutually with the other apparatus in accordance with the DTCP standard, and if the other apparatus is a legitimate one (here an apparatus conforming to the DTCP standard), encrypts the digital contents and outputs them outside.

Then, when contents recorded on a recording medium 10 are reproduced and are outputted outside as analog contents, reproducing operations according to the flowchart shown in Fig. 8B are carried out.

To be more specific, in steps S71 to S74 operations similar to those described in steps S31 to S34 of Fig. 3B are carried out to create analog contents in the input-output I/F 4.

In step S75 the input-output I/F 4 determines whether the analog contents created are allowed to be copied or not.

In other words, if for example the contents supplied to the input-output I/F 4 does not include an EMI, the analog contents created are determined to be allowed to be copied later on.

And if for example the contents supplied to the input-output I/F 4 include an EMI, or if the contents are recorded together with the EMI in accordance with the DTCP, and if the EMI is "Copy free," it is determined that the analog contents created are allowed to be copied later on. And if the EMI is "Copy once allowed," it is determined that the analog contents created are not allowed to be copied later on.

And if for example the contents supplied to the input-output I/F 4 include CGMS-A signals, or in other words if contents are recorded together with CGMS-A signals which are "Copy free," it is determined that the analog contents created are allowed to be copied later on. And if the CGMS-A signals are "Copy once allowed," it is determined that the analog contents created are not allowed to be copied later on.

If in step S75 it is determined that analog contents are allowed to be copied later on, the process proceeds to step S76, where the input-output I/F 4 outputs outside the analog contents created in a form that will prevent themselves from being copied later on, and the reproducing process comes to an end.

And if in step S75 analog contents are determined not allowed to be copied later on, the process advances to step S77, and the input-output I/F4 outputs outside the analog contents created in a form that cannot be copied later on and end the reproducing process.

In other words, if for example the EMI recorded is "Copy once allowed" as mentioned above, the contents are already recorded on the recording medium 10 and are copied once, and therefore no more copy is allowed. Thus, the input-output I/F 4 outputs outside the analog contents by adding for example Macrovision signals or CGMS-A signals indicating "Copy prohibited" thereto.

And if for example the CGMS-A signals recorded are "Copy once allowed," the contents are already recorded on the recording medium 10 and are therefore copied once. Thus, no more copy is allowed. Accordingly, the input-output I/F 4 changes the CGMS-A signals from "Copy once allowed" to "Copy prohibited," and outputs outside the same together with the analog contents.

Thus, the recording and reproduction of contents and simultaneously controlling the copies of contents enables to prevent copies going beyond the limit of contents (illegal copies).

A point to remember in this connection is that, in the above-mentioned case contents are recorded together with an EMI, CGMS-A signals and other accessory information, and if at the time of reproduction of the contents, the EMI, CGMS-A signals and other information are "Copy once allowed," they are changed to "Copy prohibited." However, if for example the EMI, CGMS-A signals and other accessory information to the contents are "Copy once allowed" when the contents are recorded, they can be change to "Copy prohibited" and recorded together with the contents.

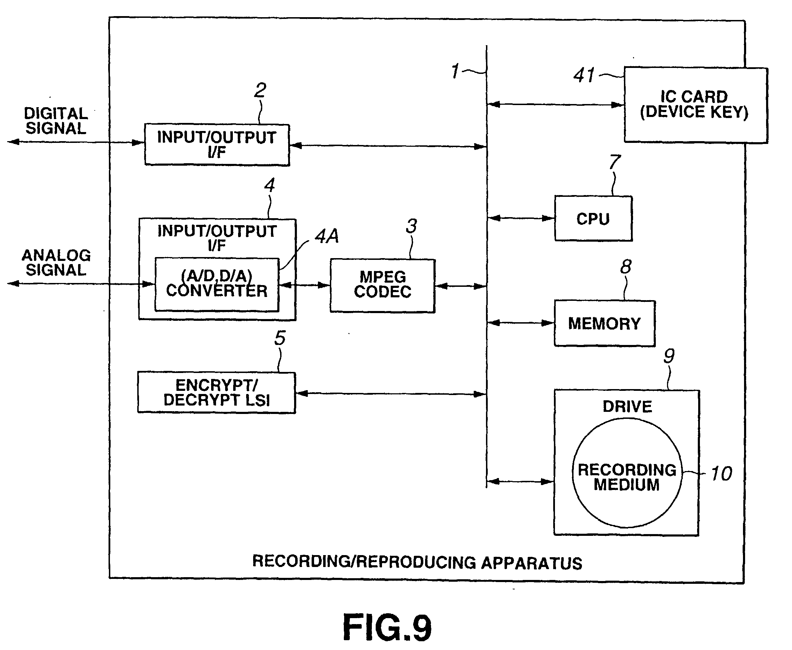

Fig. 9 is a block diagram showing another concrete configuration of a recording/ reproducing apparatus made by applying the present invention. In this figure the devices corresponding to those shown in Fig. 1 are represented by the same codes and their explanations are omitted. In other words, the recording/reproducing apparatus of Fig. 9 is configured in the same way as in Fig. 1 except that a ROM 6 is replaced by an IC card 41.

The IC card 41 is detachable to and from the recording/reproducing apparatus, and device keys are stored therein.

The recording and reproducing processes of contents are carried out in the same procedure as described using Figs. 1 to 8 with device keys being read out from the IC card 41 in place of the ROM 6 and by using the device keys read out from the IC card.

Therefore, in the embodiment of Fig. 9 too, it is possible to prevent more strongly any illegal copies without causing any burden on the shoulders of the manufacturer of recording media while containing any cost increases to the minimum in the same way as in Fig. 1.

In addition, it is possible to store in advance device keys in a built-in ROM 6 of the recording/reproducing apparatus or in an IC card 41 detachable to and from the recording/reproducing apparatus, or to supply the same to an encrypt/decrypt LSI 5 through the Internet or other networks.

It should be noted in this connection that the encrypt/decrypt LSI 5 described in Fig. 4 configured a LSI key storing section 11, a key creating section 12, an encrypting section 13 and a decrypting section 14 in a same LSI composed of a chip. However, it is possible to configure the encrypting section 13 and the decrypting section 14 in a LSI chip separate from a LSI chip in which the LSI key storing section 11 and the key creating section 12 are configured. As described above, the data keys outputted from the key creating section 12 are created by using LSI keys stored in the LSI key storing section 11 contained in the same LSI as the key creating section 12 and device keys supplied from outside of the LSI. In other words, unless both the LSI keys stored in the LSI key storing section and a key creating algorithm used in the key creating section are disclosed, data keys cannot be created. Therefore, even if such a configuration is used, it is possible to prevent illegal copies of contents. Similarly, it is possible to configure the encrypting section 13 and the decrypting section 14 of the encrypt/decrypt LSI 5 described in Fig. 6 on a LSI chip separate from the LSI chip on which the LSI storing section 11, the key creating section 12, the work key generating section 31, the encrypting section 32 and the decrypting section 33 are configured.

And for the same reason as given above, it is possible to configure the work key creating section 31, the encrypting section 32 and the decrypting section 33 as well as the encrypting section 13 and the decrypting section 14 of the encrypt/decrypt LSI 5 described in Fig. 6 in a separate LSI chip from the LSI chip in which the LSI key storing section 11 and the key creating section 12 are configured.

The series of processing described above can be carried out with hardware as a matter of course but also with software. To be more specific, the processing carried out by for example the encrypt/decrypt LSI 5 can be performed by the execution of programs by a computer. When a series of processing is undertaken by software, programs composing the software are installed in a general-purpose computer or a single-tip microcomputer.

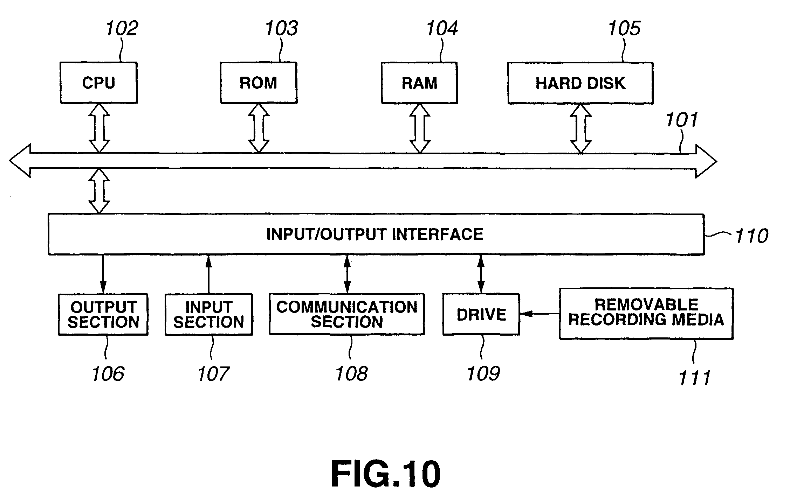

Fig. 10 is a block diagram showing the specific configuration of a computer in which programs designed to execute the series of processing mentioned above are installed. .

Programs can be stored in advance in a hard disk 105 or a built-in ROM 103 of a computer.

Or they can be stored temporarily or permanently in a floppy disc, a CD-ROM (Compact Disc Read Only Memory), a MO (Magneto optical) disc, a DVD (Digital Versatile Disc), a magnetic disc, a semiconductor memory and other removable recording media 111. Such removable recording media 111 can be offered in a so-called package software.

In addition, programs can be installed on computers from such removable recording media, transferred from a download center to computers through a man-made satellite for digital satellite broadcast, and transferred by cable to computers through a LAN (Local Area Network), the Internet and other networks. And computers can receive programs thus transferred by their communicating section 108 and have them installed on a built-in hard disc 105.

Each computer has a built-in CPU (Central Processing Unit) 102. The CPU 102 is connected with an input-output interface 110 through a bus 101, and the CPU 102, in response to instructions inputted through the input-output interface 110 by the user operating an inputting section 107 composed of a keyboard, mouse, etc., executes a program stored in the ROM (Read Only Memory) 103. Or the CPU 102 loads a RAM (Random Access Memory) 104 with programs stored in the hard disc 105, programs transferred from a satellite or a network, received by the communicating section 108 and installed in the hard disc 105, or programs read out from a removable recording medium 111 fitted onto the drive 109 and installed on the hard disc 105 and executes them. By these steps, the CPU 102 executes operations according to the flowchart mentioned above or operations carried out by the configuration shown in the block diagram above. And the CPU 102 outputs as required through for example the input-output interface 110 the results of such processing from the output section 106 composed of a LCD (Liquid Crystal Display), a speaker, etc., or transmits from the communicating section 108 or records them on the hard disc 105.

When the above-mentioned series of steps are arranged in a way that can be processed by programs, the steps corresponding to the processing of the encrypt/ decrypt LSI 5 are made by tamper-resistant software, and LSI keys are embedded in the programs. As for LSI keys, essentially common keys for all the programs are embedded. However, it is possible to store common keys for each group of programs (for example by the product lot). Here, the term "tamper-resistant software" means software provided with defensive functions against illicit internal analyses (reverse analyses) or remodeling. An example of the methods of making tamper-resistant software is shown in the U.S. Patent 5,892,899. For device keys stored in the ROM 6, serial numbers of computers stored in the ROM 103 or the serial numbers of OS (Operating System) stored in the hard disc 105 are used.

In the meanwhile, with regard to device keys, in addition to the use of serial numbers of computers or those of OS, serial numbers allocated individually to programs when the programs are installed in computers may be inputted by the users through the input-output interface 110. In other words, specific information for each computer or each group of computers on which the program is to be installed may be used as device keys.

The composition of programs in such a way that allows them to acquire LSI keys and device keys as mentioned above leads to the composition of programs in such a way that allows them to keep a common LSI key or keys to all the programs or to each group of programs. Therefore, it is enough to distribute identical programs to users thus making it possible to reduce the cost of program distribution. In addition, the use of specific information for each computer or each group of computers to which the program is to be installed enables to make specific keys for each apparatus out of the data keys used for encryption and decryption. Thus, it becomes possible to prevent illegal copies of data.

Here, the steps of describing programs to have computers to execute various types of processing shown in the present specification need not necessarily follow the chronological order described in the flowchart, but they include parallel or separately executed processing (for example parallel processing or processing by object).

And programs may be processed by a single computer or more computers constituting thus a distributed processing. Furthermore, programs may be transferred to a distant computer to be processed thereby.

In the present embodiment, the block of encrypting/decrypting contents is composed of a single tip encrypt/decrypt LSI 5. The block of encrypting/decrypting contents, however, may be realized as a software module executed by the CPU 7.

## Claims

1. An information processing apparatus for encrypting information and decrypting encrypted information comprising:
a first key creating means for creating the first encryption key information, which contains built-in key information;
a supplying means for supplying external key information related to the first information processing apparatus to the first key creating means from outside the key creating means; and
a first processing means for encrypting or decrypting with the first encryption key information;
wherein the first key creating means includes a storing means for storing built-in key information and an encrypt key creating means for creating the first encryption key information by using the built-in key information stored in the storing means stored in the first key creating means and external key information provided by the providing means.

2. The information processing apparatus according to claim 1, wherein the first key creating means contains the first processing means.

3. The information processing apparatus according to claim 1, wherein the first processing means encrypts contents data with the first encryption key information created by the first key creating means and create encrypted contents data.

4. The information processing apparatus according to claim 1 wherein the first processing means decrypts the encrypted contents data with the first encryption key information created by the first key creating means and create contents data.

5. The information processing apparatus according to claim 1 further comprising:
a second key creating means for creating the second encryption key information; and
a second processing means for encrypting with the second encryption key information,
wherein the first processing means encrypts the second encryption key information created by the second key creating means with the first encryption key information created by the first key creating means and creates encrypted second encryption key information, and
wherein the second processing means encrypts contents data with the second encryption key information created by the second key creating means and creates encrypted contents data.

6. The information processing apparatus according to claim 5 further comprising:
a recording means for recording information on recording medium;
wherein the first processing means creates the encrypted second encryption key information and records the encrypted second encryption key information on the recording medium with the recording means; and
wherein the second processing means creates the encrypted contents data and records the encrypted contents data on the recording medium with the recording means.

7. The information processing apparatus according to claim 5, wherein the first key creating means contains the second key creating means and the second processing means.

8. The information processing apparatus according to claim 7, wherein the first key creating means further contains the first processing means.

9. The information processing apparatus according to claim 1, wherein the built-in key information are common with the key information contained in the key creating means of other information processing apparatuses.

10. The information processing apparatus according to claim 1, wherein the external key information is the key information specific to the information processing apparatus.

11. The information processing apparatus according to claim 1, wherein the encryption key creating means creates the first encryption key information when the contents data are encrypted or decrypted.

12. The information processing apparatus according to claim 1 further comprising:
a reading means for reading information from the recording medium;
wherein the first key creating means uses the recording medium key information read through the reading means from the recording medium and specific to the recording medium, built-in key information stored in the storing means contained in the first key creating means, and external key information provided from outside of the first key creating means to create the first encryption key information.

13. The information processing apparatus according to claim 1 further comprising:
a reading means for reading information from the recording medium; and
a third processing means for decrypting encrypted information;
wherein the first processing means decrypts the encrypted second encryption key information read through the reading means from the recording medium with the first encryption key information created by the first key creating means; and
wherein the third processing means decrypts the encrypted contents data read through the reading means from the recording medium with the second encryption key information decrypted by the first processing means.

14. The information processing apparatus according to claim 13, wherein the first key creating means contains the third processing means.

15. The information processing apparatus according to claim 14, wherein the first key creating means contains the first processing means.

16. The information processing apparatus according to claim 1 further comprising:
a driving apparatus for driving the recording medium;
wherein the first key creating means uses the driving apparatus key information specific to the driving apparatus, the built-in key information stored in the storing means contained in the first key creating means, and external key information supplied from the outside of the first key creating means to create the first encryption key information.

17. A key creating means for creating encryption key information for encrypting information or decrypting encrypted information comprising:
a storing means for storing built-in key information; and
an encryption key creating means for creating encryption key information with the built-in key information stored in a storing means housed in the key creating apparatus and the external key information supplied from outside of the key creating apparatus and related with the information processing apparatus to which the key creating apparatus is connected

18. A information processing method for encrypting information or decrypting encrypted information with an information processing apparatus provided with a key creating device comprising:
a supplying step for supplying the key creating device storing built-in key information with external key information related with the information processing apparatus from outside of the key creating device;
a first key creating step for creating the first encryption key information by using the built-in key information stored in the key creating device and the external key information provided from outside of the key creating device; and
a first processing step for encrypting or decrypting by means of the first encryption information.

19. The information processing method according to claim 18, wherein the information method makes the key creating device execute the first processing step.

20. The information processing method according to claim 18, wherein the first processing step encrypts contents data and creates encrypted contents data with the first encryption key information created in the first key creating step .

21. The information processing method according to claim 18, wherein the first processing step decrypts encrypted contents data and creates contents data with the first encryption key information created in the first key creating step.

22. The information processing step according to claim 18, wherein the information processing method comprising:
a second key creating step for creating the second encryption key information; and
a second processing step for encrypting data with the second encryption key information;
wherein the first processing step encrypts the second encryption key information created in the second key creating step with the first encryption key information created in the first key creating step; and
wherein the second processing step encrypts contents data and creates encrypted contents data with the second encryption key information created in the second key creating step.

23. The information processing method according to claim 22, wherein the information processing method further comprising:
an encryption key recording step for recording the second encrypted encryption key information on the recording medium; and
a contents recording step for recording the encrypted contents on the recording medium.

24. The information processing method according to claim 22, wherein the information processing method makes the key creating device execute the second key creating step and the second processing step.

25. The information processing method according to claim 24, wherein the information processing method makes the key creating device execute the first processing step.

26. The information processing method according to claim 18, wherein the built-in key information is common with the key information contained in the key creating device of other information processing apparatuses.

27. The information processing method according to claim 18, wherein the external key information is specific key information to the information processing apparatus.

28. The information processing method according to claim 18, wherein the first key creating step creates the first encryption key information at the time of encrypting or decrypting the contents data.

29. The information processing method according to claim 18, wherein the information processing method further comprising:
a reading step for reading recording medium key information specific for a recording medium from the recording medium;
wherein the first key creating step uses the recording medium key information read from the recording medium, the built-in key information stored in the key creating device, and the external key information supplied from the outside of the key creating device to create the first encryption key information.

30. The information processing method according to claim 18, wherein the information processing method further comprising:
an encryption key reading step for reading second encrypted encryption key information recorded on the recording medium;
a contents reading step for reading out encrypted contents recorded on the recording medium; and
a third processing step for decrypting encrypted information;
wherein the first processing step decrypts the second encrypted encryption information read in the encryption key reading step with the first encryption key information created in the first key creating step; and
wherein the third processing step decrypts the encrypted contents data read out in the contents reading step with second encryption key information decrypted in the first processing step.

31. The information processing method according to claim 30, wherein the information processing method makes the key creating device execute the third processing step.

32. The information processing method according to claim 31, wherein the information processing method makes the key creating device execute the first processing step.

33. The information processing method according to claim 18, wherein the first key creating step makes the key creating device create the first encryption key information with driving apparatus key information specific to the driving apparatus that drives recording media connected with the information processing apparatus, built-in key information stored in the key creating device, and external key information supplied from the outside of the key creating device.

34. A recording medium containing a program that makes the information processing apparatus provided with a key creating device to execute the step of encrypting information or decrypting encrypted information, the program comprising:
the step of providing a key creating device containing built-in key information with external key information related with the information processing device from outside of the key creating device;
the step of making the key creating device create encryption key information with the built-in key information stored in the key creating device and the external key information provided from outside of the key creating device;
and the step of encrypting information with the encryption key information created.

35. A recording medium containing a program that makes the information processing apparatus provided with a key creating device to execute the step of encrypting information or decrypting encrypted information,
the program comprising:
the step of providing a key creating device containing built-in key information with external key information related with the information processing device from outside of the key creating device;
the step of making the key creating device create encryption key information with the built-in key information stored in the key creating device and the external key information provided from the outside of the key creating device; and
the step of encrypting or decrypting with the encryption key information created.
